# FASCICULE DE BREVET EUROPEEN

(11) **EP 2 058 196 B1**
(45) Date de publication et mention de la délivrance du brevet: **03.11.2010**
(21) Numéro de dépôt: 08019339.4
(22) Date de dépôt: 05.11.2008
(51) Int. Cl.: B60T 13/575

(54) **Palpeur pour servomoteur d'assistance au freinage**
Taster für Hilfsservomotor zur Bremsung
Contact point for braking assistance servomotor

(30) Priorité: 06.11.2007 FR 0707806
(43) Date de publication de la demande: 13.05.2009
(73) Titulaire: Robert Bosch GmbH, 70442 Stuttgart (DE)
(72) Inventeur: Bacardit Simon, Juan, 08013 Barcelone (ES); Carles, Francisco M., 95470 Saint Witz (FR); Berthomieu, Bruno M., Sobreatico 08041 Barcelone (ES)
(74) Mandataire: Hurwic, Aleksander Wiktor

(56) Documents cités:
- EP-A- 1 293 407
- EP-A- 1 847 433
- WO-A-02/30725

## Description

L'invention concerne un servomoteur d'assistance au freinage à rapport d'assistance variable. L'invention est plus particulièrement applicable aux servomoteurs d'assistance au freinage pour véhicules automobiles.

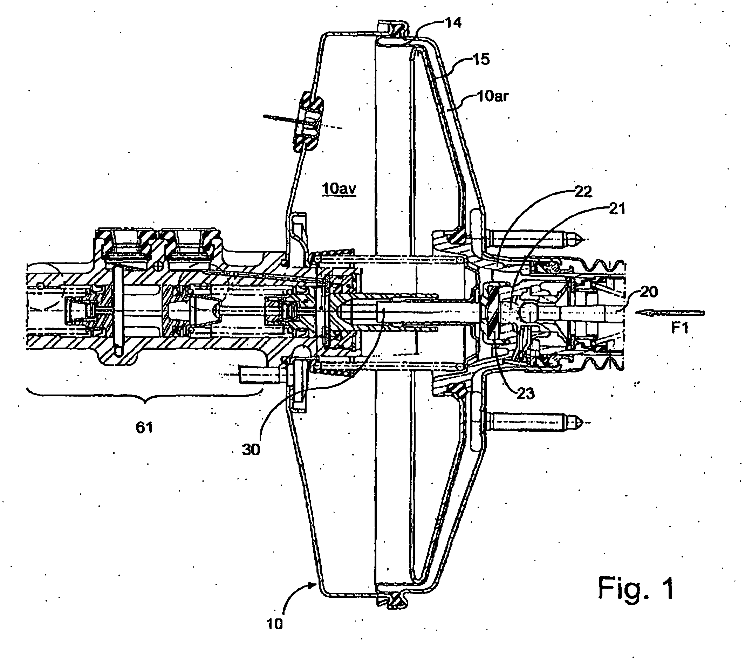

Un servomoteur d'assistance au freinage tel que celui représenté en figure 1 comporte essentiellement, dans un boîtier hermétique 10, deux chambres (la chambre avant 10av et la chambre arrière 10ar) séparées par une membrane mobile 14.

Une tige de commande 20 peut se déplacer vers l'avant du véhicule (selon la flèche F1 sur la figure 1) lorsque le conducteur du véhicule actionne la pédale de frein. Ce déplacement de la tige de commande 20 est transmis à un distributeur-plongeur 21 qui actionne des moyens d'assistance. Comme cela est connu dans la technique, ces moyens d'assistance comprennent généralement une vanne trois voies dont l'actionnement permet soit de mettre en communication la chambre avant 10av du servomoteur avec la chambre arrière 10ar, soit d'interrompre cette communication, soit de mettre en communication la chambre arrière à l'atmosphère ambiante.

La chambre avant 10av est normalement sous vide. Au repos (en l'absence de commande de freinage), les deux chambres avant et arrière sont en communication et une même pression règne dans les deux chambres.

Lorsque le conducteur appuie sur la pédale de frein, la tige de commande 20 est déplacée vers l'avant (vers la gauche sur la figure). Le distributeur-plongeur 21 est déplacé vers l'avant et commande le fonctionnement de la vanne trois voies. Celle-ci isole les deux chambres avant et arrière et met en communication la chambre arrière avec la pression atmosphérique.

En raison de la différence de pressions entre les deux chambres, une force d'assistance est exercée sur la membrane mobile 14 qui sépare les deux chambres. Cette membrane mobile 14 est associée à une jupe 15 en matériau rigide. Sous l'effet de la force d'assistance, la membrane mobile tend à se déplacer vers l'avant et entraîne la jupe 15.

La jupe 15 entraîne elle-même le piston 22 qui se déplace alors vers l'avant (selon le sens de la flèche F1) en agissant sur une tige de poussée 30 qui sert à actionner un piston du maître-cylindre 61 du circuit de freinage.

De façon classique, dans un tel agencement de servomoteur, le distributeur plongeur 21 coulisse dans un alésage du moyeu du piston 22 et forme un organe de poussée agissant sur un disque de réaction 23 qui transmet les efforts à la tige de poussée 30.

Ce disque de réaction 23 s'appuie sur la face avant du plongeur et sur la face avant du piston qui entoure le plongeur.

Dans un tel système, le servomoteur d'assistance au freinage présente un rapport d'assistance fixe. Cependant, dans certains cas de fonctionnement, par exemple en cas de freinage d'urgence, il peut être intéressant de fournir une force d'assistance dès que possible.

C'est pourquoi, dans certains systèmes, on prévoit entre la tige de commande 20 et le disque de réaction 23, un palpeur qui coulisse dans un cylindre mobile axialement à l'intérieur du piston. Les figures 2a et 2b représentent un tel système qui est décrit par exemple dans le brevet EP1322510 et également décrit dans le document EP 1 847 433.

Dans ce système on trouve donc un palpeur 31 mobile axialement à l'intérieur d'un cylindre 34 qui est mobile axialement à l'intérieur du piston 22. Le ressort 32 tend à pousser vers la gauche le cylindre 34 et à rapprocher l'extrémité 35 du palpeur 31 vers l'extrémité de gauche du cylindre 34. Dans ce système, l'effort de la tige de commande 20 est exercé par le distributeur plongeur 21 sur le palpeur 31.

L'invention concerne un perfectionnement à ce type de dispositif présentant l'avantage d'être plus facile à fabriquer et permettant de réduire le temps de montage du servomoteur.

L'invention concerne donc un dispositif palpeur pour servomoteur d'assistance au freinage comportant:
- un dispositif de commande pneumatique commandé par une vanne trois voies,
- un distributeur plongeur permettant de commander le dispositif de commande pneumatique,
- une tige de commande destinée à appliquer un effort de déplacement axial au distributeur plongeur,
- un piston mobile axialement sous la commande du dispositif de commande pneumatique,
- une tige de poussée recevant des efforts de déplacement axial dudit piston mobile et du distributeur plongeur et qui les retransmet vers un maître cylindre de frein,
- un disque de réaction placé entre la tige de commande et la tige de poussée,
- un dispositif palpeur mobile axialement situé entre le disque de réaction et la tige de commande,
   Selon l'invention, le dispositif palpeur comporte:
- un cylindre mobile axialement dont le déplacement est commandable par la tige de commande,
- un piston palpeur mobile axialement dans ledit cylindre mobile,
- un ressort tendant à pousser le piston palpeur vers l'avant et à maintenir sa face avant sensiblement dans le même plan que la face avant du cylindre mobile.

Selon une forme de réalisation avantageuse de l'invention, le cylindre mobile comporte une cavité capable de recevoir en coulissement axial le piston palpeur mobile. Le cylindre mobile comporte un épaulement formant butée pour une pièce de poussée du piston palpeur et limitant le déplacement du piston palpeur vers l'avant.

De plus, le cylindre mobile comporte avantageusement une partie arrière. Ledit ressort s'appuie d'une part sur cette partie arrière et, d'autre part, le piston palpeur.

Selon une forme de réalisation ladite partie arrière est soudée au cylindre mobile.

Selon une autre forme de réalisation, ladite partie arrière et le cylindre mobile sont en une seule pièce.

On peut également prévoir que la paroi latérale du cylindre mobile comporte une fenêtre permettant le coulissement de la pièce de poussée du piston palpeur.

Avantageusement, on prévoira également que la partie arrière comporte un premier bossage axial permettant le centrage du ressort.

Selon une variante de réalisation, le piston palpeur comporte un deuxième bossage axial qui permet également le centrage du ressort.

Pour permettre un montage du piston plongeur dans le cylindre mobile, la longueur axiale de la fenêtre ainsi que la distance qui sépare la face avant du premier bossage de l'épaulement du cylindre mobile sont toutes deux supérieures à la longueur axiale totale du piston plongeur. Dans cette forme de réalisation, où la pièce de poussée et le piston plongeur sont en deux pièces, on peut prévoir que cette distance est simplement supérieure à l'épaisseur de la pièce de poussée du piston plongeur.

Dans cette forme de réalisation, ladite fenêtre possède une largeur suffisante pour permettre le passage de la pièce de poussée du piston plongeur.

Selon une variante de réalisation de l'invention, la hauteur de la fenêtre est supérieure à la longueur axiale totale du piston plongeur, de sa pièce de poussée et de son bossage.

On peut également prévoir que le piston plongeur et son épaulement sont en deux parties.

Les différents objets et caractéristiques de l'invention apparaîtront plus clairement dans la description qui va suivre et dans les figures annexées qui représentent:
- la figure 1, un servomoteur d'assistance au freinage connu dans la technique auquel s'applique l'invention,
- les figures 2a et 2b, un dispositif, connu dans la technique, de transmission de forces entre la tige de commande animée par la pédale de frein d'une part et le disque de réaction d'autre part,
- les figures 3a et 3b, un dispositif de transmission de forces, selon l'invention, entre la tige de commande animée par la pédale de frein d'une part et le disque de réaction d'autre part,
   les figures 4a et 4b, une variante de réalisation du dispositif des figures 3a et 3b.

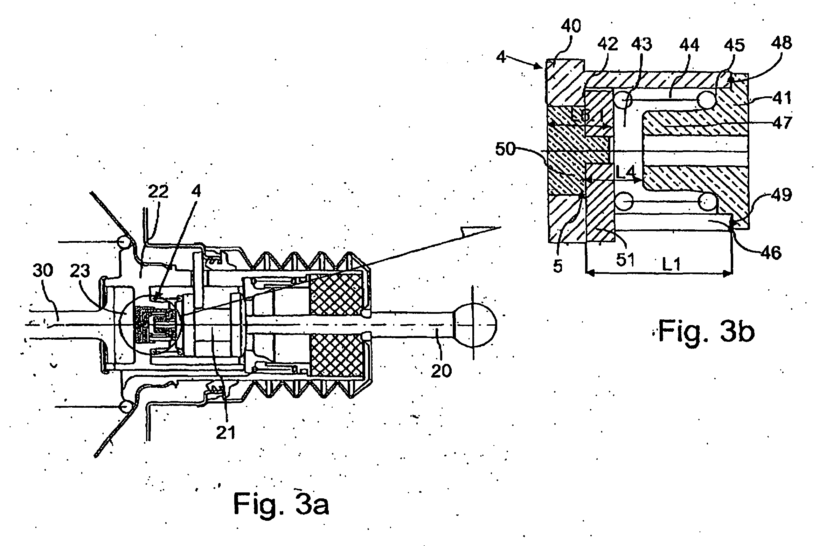

En se reportant aux figures 3a et 3b, on va tout d'abord décrire un exemple de réalisation selon l'invention d'un dispositif de transmission de forces entre le piston du servomoteur et le distributeur-plongeur animé par la tige de commande d'une part et le disque de réaction associé à la tige de poussée commandant les pistons du maître cylindre d'autre part.

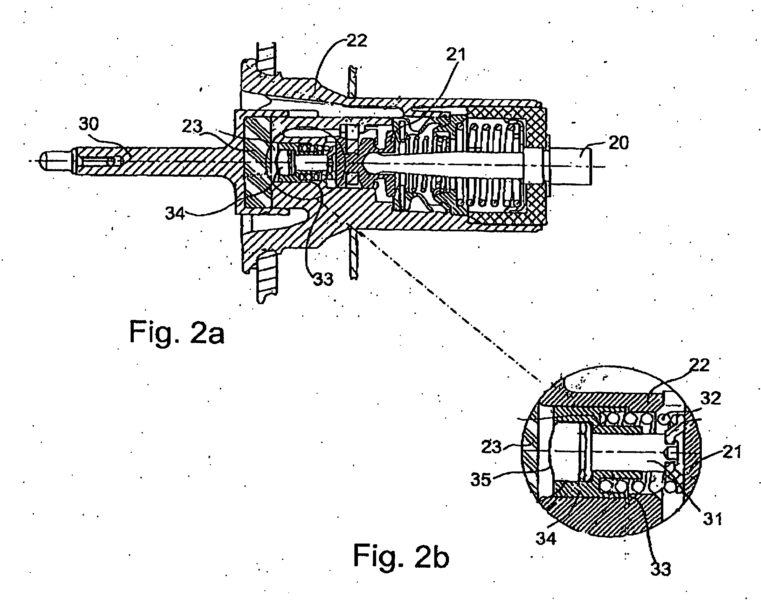

Ce dispositif s'applique à un servomoteur d'assistance au freinage tel que celui de la figure 1. Sur ces figures 3a et 3b, on n'a représenté que la partie du servomoteur contenant le dispositif de l'invention. Les composants représentés sur les figures 3a et 3b portent les mêmes références que les composants des figures 1, 2a, 2b qui assurent les mêmes fonctions.

On conviendra, dans cette description, que les termes "avant" et "arrière" signifient, sur les figures annexées, respectivement "gauche" et "droite".

On retrouve donc sur ces figures la tige de commande 20 qui commande le déplacement du distributeur-plongeur 21, lequel déclenche le fonctionnement du servomoteur d'assistance au freinage et le déplacement de son piston 22 sous l'effet de la différence de pressions entre les chambres avant et arrière du servomoteur. On retrouve également le dispositif de réaction (disque de réaction) 23 et la tige de poussée 30 qui permettent de retransmettre les forces vers les pistons du maître cylindre et inversement.

Le distributeur-plongeur 21 appui sur le disque de réaction par l'intermédiaire d'un palpeur 4.

Ce palpeur comporte un cylindre 40 mobile axialement dans un alésage du piston 22. Le cylindre mobile 40 contient un piston palpeur 5 mobile axialement.

Le piston palpeur 5 comporte un piston mobile 50 et une pièce de poussée 51 dont le déplacement vers l'avant est limité par un épaulement 42 du cylindre mobile.

Un ressort 44 s'appuie sur une paroi 45 de la partie arrière 41 du cylindre mobile et tend à maintenir le palpeur vers la gauche en appuyant sur la pièce de poussée 51.

Un bossage central 47 permet de centrer le ressort 44 dans le cylindre mobile.

Selon cette conception du palpeur 4, l'effort de poussée exercé par le distributeur plongeur 21 vers la tige de poussée 30, est transmis principalement par le cylindre mobile 40. La réaction venant du maître cylindre sera exercée sur le piston mobile 50 du palpeur par l'intermédiaire du disque de réaction.

Le système de l'invention diffère de l'art antérieur où l'effort de poussée est de la tige de commande est exercé par le palpeur mobile (31 sur les figures 2a et 2b).

Dans cette forme de conception, le palpeur 4 peut alors être réalisé en un ensemble monobloc.

Selon un premier mode de réalisation, la partie arrière 41 peut être soudée ou collée, en des points 48 et 49, au corps du cylindre mobile après avoir monté le piston mobile 50 et la pièce de poussée 51 dans l'alésage 43 du cylindre mobile.

Selon un deuxième mode réalisation, le corps du cylindre mobile et la partie arrière 41 sont réalisés en une seule pièce. Le piston mobile 50 et la pièce de poussée 51 sont montés à l'intérieur de l'alésage 43 en les insérant par l'ouverture 46 prévue dans la paroi du cylindre mobile.

Pour cela, il convient que la dimension L1 de l'ouverture ainsi que la distance L4 séparant le bossage 47 de l'épaulement 42 soient supérieures à la longueur axiale L5.1 du piston 50 du palpeur et de la pièce de poussée 51.

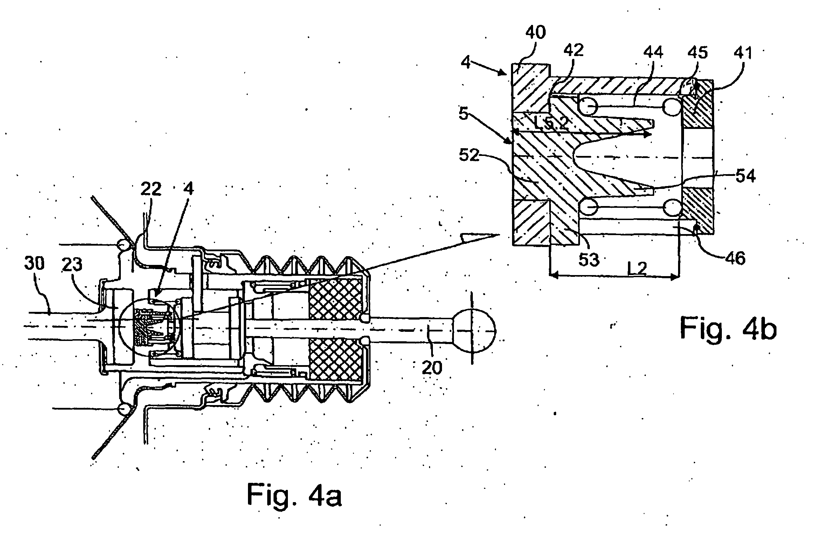

Les figures 4a et 4b représente une variante de réalisation du plongeur 5 selon l'invention.

Dans cette variante, le piston du plongeur et la pièce de poussée sont réalisés en une seule pièce 52. Le piston plongeur comporte alors un épaulement 53 qui limite son déplacement vers l'avant. De plus, sur les figures 4a et 4b, c'est le piston 52 du plongeur qui possède un bossage 54, au lieu de la paroi 45 de la partie arrière 41 du cylindre mobile 4, pour centrer le ressort 44.

Comme dans le mode réalisation des figure 3a et 3b, la partie arrière 41 est soudée ou collée au corps du cylindre mobile.

Dans le cas ou la partie arrière 41 et le corps du cylindre mobile sont réalisés en une seule pièce, la dimension L2 de la fenêtre 46 doit être supérieure à la dimension axiale L5.2 du plongeur 5 pour permettre son montage dans le cylindre mobile 4.

## Revendications

1. Servomoteur d'assistance au freinage à rapport d'assistance variable comportant :
- un dispositif de commande pneumatique commandé par une vanne trois voies,
- un distributeur plongeur (21) permettant de commander le dispositif de commande pneumatique,
- une tige de commande (20) destinée à appliquer un effort de déplacement axial au distributeur plongeur,
- un piston (22) mobile axialement sous la commande du dispositif de commande pneumatique,
- une tige de poussée (30) recevant des efforts de déplacement axial dudit piston mobile et du distributeur plongeur (21) et les retransmettant vers un maître cylindre de frein,
- un disque de réaction (23) placé entre la tige de commande (21) et la tige de poussée (30),
- un dispositif palpeur (4) mobile axialement et situé entre le disque de réaction (23) et la tige de commande (20),
le dispositif palpeur (4) comportant:
- un cylindre mobile axialement (40) dont le déplacement est commandable par la tige de commande,
- un piston palpeur (5) mobile axialement dans ledit cylindre mobile (40),
- un ressort (44) tendant à pousser le piston palpeur (5) vers l'avant et à maintenir sa face avant sensiblement dans le même plan que la face avant du cylindre mobile,
**caractérisé en ce que** le dispositif palpeur est réalisé en un ensemble monobloc dont une partie arrière (41) est soudée ou collée sur une partie avant.

2. Dispositif palpeur selon la revendication 1, **caractérisé en ce que** le cylindre mobile (40) comporte une cavité (43) capable de recevoir en coulissement axial le piston palpeur mobile (5), le cylindre mobile (40) comportant un épaulement (42) formant butée pour une pièce de poussée (51) du piston palpeur (5) et limitant le déplacement du piston palpeur vers l'avant.

3. Dispositif palpeur selon la revendication 2, **caractérisé en ce que** le cylindre mobile (4) comporte une partie arrière (41), le ressort (44) s'appuyant d'une part sur cette partie arrière et, d'autre part, sur le-piston palpeur (5).

4. Dispositif palpeur selon la revendication 3, **caractérisé en ce que** ladite partie arrière (41) est soudée ou collée au cylindre mobile (40).

5. Dispositif palpeur selon la revendication 3, **caractérisé en ce que** ladite partie arrière (41) et le cylindre mobile (40) sont en une seule pièce.

6. Dispositif palpeur selon l'une quelconque des revendications précédentes, **caractérisé en ce que** la paroi latérale du cylindre mobile (40) comporte une fenêtre (46) permettant le coulissement de la pièce de poussée (51) du piston palpeur (5).

7. Dispositif palpeur selon l'une quelconque des revendications 3 à 6, **caractérisé en ce que** la partie arrière (41) comporte un premier bossage axial (47) permettant le centrage du ressort (44).

8. Dispositif palpeur selon l'une quelconque des revendications 3 à 6, **caractérisé en ce que** le piston palpeur (5) comporte un deuxième bossage axial (54) permettant le centrage du ressort (44).

9. Dispositif palpeur selon la revendication 7, **caractérisé en ce que** la longueur axiale (L1) de la fenêtre (46) ainsi que la distance (L4) qui sépare la face avant du premier bossage (47) de l'épaulement (42) du cylindre mobile (40) sont toutes deux supérieures à longueur axiale totale (L5.1) du piston plongeur (5).

10. Dispositif palpeur selon l'une quelconque des revendications 3 à 6, **caractérisé en ce que** le piston plongeur (50) et la pièce de poussée (51) sont en deux parties.

11. Dispositif palpeur selon la revendication 10, **caractérisé en ce que** la longueur axiale (L1) de la fenêtre (46) ainsi que la distance (L4) qui sépare la face avant du premier bossage (47) de l'épaulement (42) du cylindre mobile sont toutes deux supérieures à l'épaisseur de la pièce de poussée (51) du piston plongeur (5).

12. Dispositif palpeur selon la revendication 9, **caractérisé en ce que** ladite fenêtre (46) possède une largeur suffisante pour permettre le passage de la pièce de poussée (51) du piston plongeur (5).

13. Dispositif palpeur selon la revendication 8, **caractérisé en ce que** la longueur axiale (L2) de la fenêtre (46) est supérieure à la longueur axiale totale du piston plongeur (52), de son épaulement (53) et de son bossage (54).

## Claims

1. Brake booster with a variable boost ratio comprising :
- a pneumatic control device (10, 14, 15) controlled by a three-way valve,
- a slide valve plunger (21) providing control of the pneumatic control device,
- a control rod (20) intended to apply an axial movement force to the slide valve plunger,
- a piston (22) able to move axially under the control of the pneumatic control device,
- a push rod (30) receiving axial movement forces from said moving piston and from the slide valve plunger (21) and forwarding them to a brake master cylinder,
- a reaction disk (23) positioned between the control rod (21) and the push rod (30),
- a sensor feeler device (4) able to move axially and situated between the reaction disk (23) and the control rod (20),
the sensor feeler device (4) comprising :
- an axially moveable cylinder (40) the movement of which can be controlled by the control rod,
- a sensor feeler piston (5) able to move axially in said moving cylinder (40),
- a spring (44) that tends to push the sensor feeler piston (5) forward and keep its front face substantially in the same plane as the front face of the moving cylinder.
**characterized in that** the sensor feeler device (4) is made as a single piece with the rear part (41) is welded or bended on a front part.

2. Sensor feeler device according to Claim 1, **characterized in that** the moving cylinder (40) comprises a cavity (43) capable of accepting, such that it can slide axially, the moving sensor feeler piston (5), the moving cylinder (40) comprising a shoulder (42) that forms a stop for a thrust piece (51) of the sensor feeler piston (5) and limits the forward movement of the sensor feeler piston.

3. Sensor feeler device according to Claim 2, **characterized in that** the moving cylinder (4) comprises a rear part (41), the spring (44) resting, on the one hand, against this rear part and, on the other hand, against the sensor feeler piston (5).

4. Sensor feeler device according to Claim 3, **characterized in that** said rear part (41) is welded or bonded to the moving cylinder (40).

5. Sensor feeler device according to Claim 3, **characterized in that** the said rear part (41) and the moving cylinder (40) are made as one piece.

6. Sensor feeler device according to any one of the preceding claims, **characterized in that** the side wall of the moving cylinder (40) comprises an aperture (46) to allow the thrust piece (51) of the sensor feeler piston (5) to slide.

7. Sensor feeler device according to any one of Claims 3 to 6, **characterized in that** the rear part (41) comprises a first axial boss (47) for centering the spring (44).

8. Sensor feeler device according to any one of Claims 3 to 6, **characterized in that** the sensor feeler piston (5) has a second axial boss (54) for centering the spring (44).

9. Sensor feeler device according to Claim 7, **characterized in that** the axial length (L1) of the aperture (46) and the distance (L4) separating the front face of the first boss (47) from the shoulder (42) of the moving cylinder (40) are both greater than the total axial length (L5.1) of the plunger piston (5).

10. Sensor feeler device according to any one of Claims 3 to 6, **characterized in that** the plunger piston (50) and the thrust piece (51) are made in two parts.

11. Sensor feeler device according to Claim 10, **characterized in that** the axial length (L1) of the aperture (46) and the distance (L4) separating the front face of the first boss (47) from the shoulder (42) of the moving cylinder are both greater than the thickness of the thrust piece (51) of the plunger piston (5).

12. Sensor feeler device according to Claim 9, **characterized in that** said aperture (46) is wide enough to allow the thrust piece (51) of the plunger piston (5) through.

13. Sensor feeler device according to Claim 8, **characterized in that** the axial length (L2) of the aperture (46) is greater than the total axial length of the plunger piston (52), of its shoulder (53) and of its boss (54).

## Patentansprüche

1. Bremsunterstützungsservomotor mit variablem Unterstützungsverhältnis, mit:
- einer pneumatischen Steuervorrichtung, die von einem Dreiwegeventil gesteuert wird,
- einem Verteilertauchkolben (21), der die Steuerung der pneumatischen Steuervorrichtung ermöglicht,
- einer Steuerstange (20), die dazu vorgesehen ist, eine Axialverlagerungskraft auf den Verteilertauchkolben aufzubringen,
- einem Kolben (22), der durch die Steuerung durch die pneumatische Steuervorrichtung axial beweglich ist,
- einer Schubstange (30), die Axialverlagerungskräfte des beweglichen Kolbens und des Verteilertauchkolbens (21) aufnimmt und sie zu einem Hauptbremszylinder weiterleitet,
- einer zwischen der Steuerstange (21) und der Schubstange (30) angeordneten Reaktionsscheibe (23),
- einer Tastvorrichtung (4), die axial beweglich und zwischen der Reaktionsscheibe (23) und der Steuerstange (20) angeordnet ist,
wobei die Tastvorrichtung (4) Folgendes aufweist:
- einen axial beweglichen Zylinder (40), dessen Verlagerung von der Steuerstange gesteuert werden kann,
- einen Tastkolben (5), der im beweglichen Zylinder (40) axial beweglich ist,
- eine Feder (44), die dazu neigt, den Tastkolben (5) nach vorne zu drücken und seine Vorderfläche im Wesentlichen in der gleichen Ebene wie die Vorderfläche des beweglichen Zylinders zu halten,
**dadurch gekennzeichnet, dass** die Tastvorrichtung durch eine einstückige Baugruppe gebildet ist, bei der ein hinterer Abschnitt (41) an einen vorderen Abschnitt geschweißt oder geklebt ist.

2. Tastvorrichtung nach Anspruch 1, **dadurch gekennzeichnet, dass** der bewegliche Zylinder (40) einen Hohlraum (43) aufweist, der den beweglichen Tastkolben (5) axial gleitend aufnehmen kann, wobei der bewegliche Zylinder (40) einen Absatz (42) aufweist, der einen Anschlag für ein Schubstück (51) des Tastkolbens (5) bildet und die Verlagerung des Tastkolbens nach vorne begrenzt.

3. Tastvorrichtung nach Anspruch 2, **dadurch gekennzeichnet, dass** der bewegliche Zylinder (40) einen hinteren Abschnitt (41) aufweist, wobei sich die Feder (44) zum einen an diesem hinteren Abschnitt und zum anderen am Tastkolben (5) abstützt.

4. Tastvorrichtung nach Anspruch 3, **dadurch gekennzeichnet, dass** der hintere Abschnitt (41) an den beweglichen Zylinder (40) geschweißt oder geklebt ist.

5. Tastvorrichtung nach Anspruch 3, **dadurch gekennzeichnet, dass** der hintere Abschnitt (41) und der bewegliche Zylinder (40) einstückig ausgebildet sind.

6. Tastvorrichtung nach einem der vorhergehenden Ansprüche, **dadurch gekennzeichnet, dass** die Seitenwand des beweglichen Zylinders (40) ein Schlitzloch (46) aufweist, das das Gleiten des Schubstücks (51) des Tastkolbens (5) ermöglicht.

7. Tastvorrichtung nach einem der Ansprüche 3 bis 6, **dadurch gekennzeichnet, dass** der hintere Abschnitt (41) eine erste axiale Erhebung (47) aufweist, die das Zentrieren der Feder (44) ermöglicht.

8. Tastvorrichtung nach einem der Ansprüche 3 bis 6, **dadurch gekennzeichnet, dass** der Tastkolben (5) eine zweite axiale Erhebung (54) aufweist, die das Zentrieren der Feder (44) ermöglicht.

9. Tastvorrichtung nach Anspruch 7, **dadurch gekennzeichnet, dass** die axiale Länge (L1) des Schlitzlochs (46) und der Abstand (L4) zwischen der Vorderfläche der ersten Erhebung (47) und dem Absatz (42) des beweglichen Zylinders (40) beide größer sind als die axiale Gesamtlänge (L5.1) des Tauchkolbens (5).

10. Tastvorrichtung nach einem der Ansprüche 3 bis 6, **dadurch gekennzeichnet, dass** der Tauchkolben (50) und das Schubstück (51) aus zwei Teilen bestehen.

11. Tastvorrichtung nach Anspruch 10, **dadurch gekennzeichnet, dass** die axiale Länge (L1) des Schlitzlochs (46) und der Abstand (L4) zwischen der Vorderfläche der ersten Erhebung (47) und dem Absatz (42) des beweglichen Zylinders beide größer sind als die Dicke des Schubstücks (51) des Tauchkolbens (5).

12. Tastvorrichtung nach Anspruch 9, **dadurch gekennzeichnet, dass** das Schlitzloch (46) eine Breite besitzt, die ausreicht, um das Durchführen des Schubstücks (51) des Tauchkolbens (5) zu ermöglichen.

13. Tastvorrichtung nach Anspruch 8, **dadurch gekennzeichnet, dass** die axiale Länge (L2) des Schlitzlochs (46) größer ist als die axiale Gesamtlänge des Tauchkolbens (52), seines Absatzes (53) und seiner Erhebung (54).
